# FASCICULE DE BREVET EUROPEEN

(11) **EP 2 633 372 B1**
(45) Date de publication et mention de la délivrance du brevet: **22.12.2021**
(21) Numéro de dépôt: 11773292.5
(22) Date de dépôt: 25.10.2011
(51) Int. Cl.: G05B 15/02

(54) **PROCÉDÉ DE FONCTIONNEMENT D'UNE INSTALLATION DOMOTIQUE**
VERFAHREN ZUM BETRIEB EINER DOMOTIKANLAGE
METHOD OF OPERATING A HOME-AUTOMATION INSTALLATION

(30) Priorité: 26.10.2010 FR 1058764
(43) Date de publication de la demande: 04.09.2013
(73) Titulaire: SOMFY ACTIVITES SA, 74300 Cluses (FR)
(72) Inventeur: MIGNOT, Pierre, 05380 Châteauroux les Alpes (FR); DUCHENE, Isabelle, 74970 Marignier (FR); LAPIERRE, Stéphane, 74700 Sallanches (FR)
(74) Mandataire: Novaimo
(86) Numéro de dépôt international: PCT/EP2011/068632
(87) Numéro de publication internationale: WO 2012/055856

(56) Documents cités:
- WO-A1-2010/018538
- US-A1- 2008 238 661
- US-B2- 7 363 028
- US-B2- 7 724 687
- None

## Description

L'invention concerne le domaine de la commande d'équipements domotiques dans un bâtiment ou à ses abords, tels des équipements de fermeture ou de protection solaire motorisés, de chauffage et climatisation, d'éclairage, de gestion de piscine individuelle.

Ces équipements domotiques communiquent entre eux à l'aide d'un réseau domotique de type radiofréquences ou par courants porteurs, et peuvent communiquer avec des serveurs distants.

Dans tous les cas se pose un problème de sécurité et d'authentification, aussi bien lors de la configuration d'une installation que lors de son fonctionnement, notamment dans la perspective d'un recours à des éléments mobiles de commande réalisés à partir de moyens communicants banalisés tels des assistants numériques personnels ou des téléphones portables tels des smartphones.

Lors du fonctionnement, le nombre croissant d'équipements domotiques à commander rend de plus nécessaire la mise en oeuvre d'ergonomies simplifiées pour sélectionner l'équipement voulu, sans pour autant avoir recours à des menus déroulants ou des choix d'icônes peu identifiables. Ce besoin est d'autant plus marqué qu'une partie vieillissante de la population est confrontée à des problèmes de vision.

La demande de brevet WO 03/007266 décrit la commande d'un objet à distance à l'aide d'un pointeur muni d'une source lumineuse.

La demande de brevet WO 03/088486 décrit un procédé d'évaluation de champ proche permettant de s'assurer, lors de la transmission d'une commande d'appairage, qu'un émetteur de cette commande est situé à proximité immédiate d'un récepteur.

Le brevet US 7,724,687 prévoit qu'une donnée confidentielle telle une « clé-maison » ne peut être transmise d'un émetteur d'ordres vers un autre émetteur d'ordres que si un récepteur d'ordres valide préalablement cette transmission.

La demande de brevet WO 03/081352 décrit un procédé de changement de clé commune tandis que le brevet US 7,683,754 décrit un procédé de sélection d'un groupe pour la transmission d'une clé commune, par exemple en utilisant la tension d'alimentation des seuls éléments du groupe.

La demande de brevet WO 2010/049383 décrit une unité portable apte à communiquer sans contact en champ proche avec des étiquettes électroniques disposées sur des équipements domotiques et/ou en des endroits particuliers d'un bâtiment, par exemple à l'entrée des pièces d'un logement.

Les demandes de brevet EP 0 973 126 et EP 1 164 540 décrivent l'utilisation du code SIM de carte mémoire d'un téléphone mobile, et éventuellement d'un lecteur d'empreinte digitale de ce téléphone mobile, pour sécuriser la commande d'équipements. De même pour le brevet US 6,535,107 qui concerne le domaine de l'identification d'un conducteur de véhicule. Dans ce cas, un transpondeur est inséré dans le téléphone mobile afin de permettre l'échange de données avec le système de sécurité du véhicule.

Dans la demande de brevet EP 1 482 718, le transmetteur destiné à établir la communication avec l'élément à commander est raccordé au téléphone mobile par la prise jack d'écouteur ou par couplage et utilise une modulation DTMF ou analogue pour transmettre les signaux codés depuis le téléphone mobile vers le transmetteur.

Le brevet EP 0 913 979 décrit également l'adjonction à un téléphone mobile d'un émetteur supplémentaire pour la commande à distance d'un objet. Un mode spécifique permet la commande à distance sans utilisation de la radiocommunication mobile et le code d'abonné SIM de la carte est utilisé comme moyen d'authentification de l'utilisateur. La structure cellulaire du réseau de communication mobile est utilisée comme possibilité de contrôle de l'authentification.

La demande de brevet US 2002/0031228 décrit un téléphone mobile apte à communiquer à la fois avec un réseau public de communication de type GSM et, à faible distance, avec des dispositifs Bluetooth, par exemple des serrures de chambres d'hôtel ou de véhicule de location. Une connexion entre le téléphone mobile et un serveur distant est assurée via le réseau GSM. Le serveur distant transmet la clé d'authentification Bluetooth au téléphone mobile, sous forme cryptée et décryptable par le téléphone mobile. La clé d'authentification Bluetooth est ensuite transmise par le téléphone mobile au dispositif Bluetooth au moyen du transmetteur Bluetooth. Le code personnel d'identification PIN de l'utilisateur peut être utilisé pour sécuriser la transmission.

La demande de brevet DE 10 2005038 471 décrit similairement un terminal mobile communiquant aussi bien sur réseau GSM que sur Bluetooth ou similaire, pour permettre l'accès à des véhicules de location. L'utilisateur s'identifie avec un mot de passe sur le terminal mobile.

La demande de brevet DE 10 2007 059 246 décrit un même dispositif, dans le cas d'une commande de porte de garage.

La demande WO 00/57375 décrit un système de sécurité antivol pour équipements électriques domestiques. Chaque fois que l'équipement est mis sous tension, il ne fonctionne qu'à la réception d'un code de libération, transmis par un contrôleur de maison à travers l'alimentation électrique ou un réseau local. Tout équipement déplacé de sa position autorisée, c'est-à-dire ne recevant pas son code de libération de la part du contrôleur de maison, cesse de fonctionner. Il est prévu que le contrôleur de maison peut lui-même être volé en même temps que l'équipement électrique domestique. Pour pallier cet inconvénient, le contrôleur de maison comprend un moyen de localisation par exemple par l'intermédiaire d'un réseau cellulaire ou par GPS et il peut transmettre sa position à un centre opérationnel distant, en utilisant par exemple le réseau internet ou GSM. Le contrôleur de maison n'a pas d'autre fonction dans une installation que d'assurer le blocage ou le déblocage des équipements en cas de déconnexion et reconnexion de ceux-ci sur le réseau électrique.

La demande de brevet WO 01/71685 décrit une télécommande universelle et des procédés aptes à afficher sur l'écran de la télécommande des icônes relatives aux équipements à portée radio de la télécommande, et/ou des interfaces de commande de ces équipements.

La demande de brevet FR 2 924 890 décrit un procédé de sélection automatique d'un périphérique tel un équipement domotique utilisant un critère de proximité : un message est diffusé vers tous les périphériques et chacun d'eux répond. En fonction du niveau de signal reçu, on repère automatiquement le périphérique le plus proche pour lui envoyer une commande.

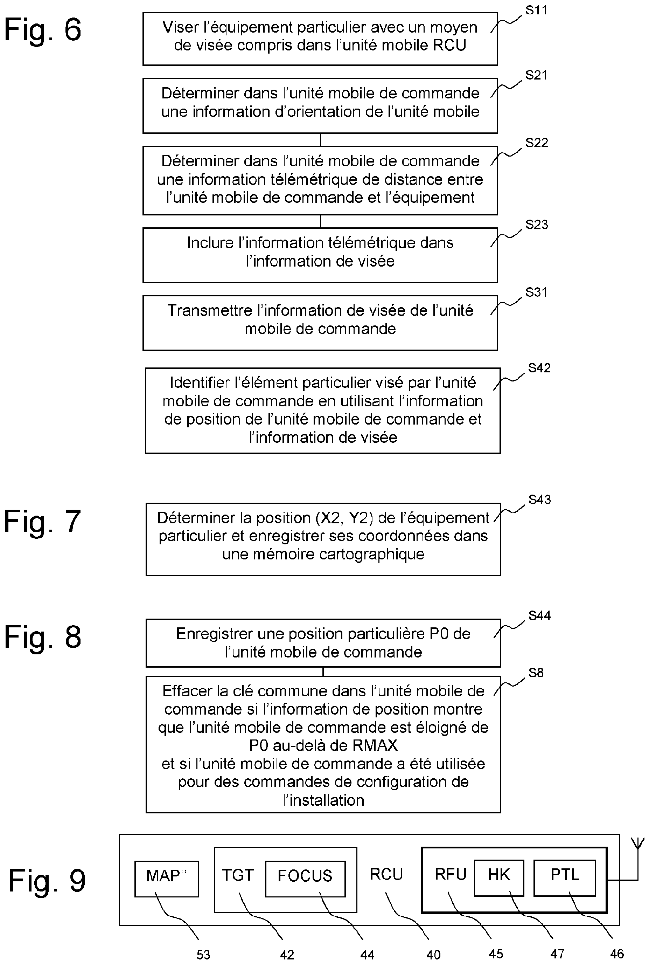

Le brevet US 7,289,014 décrit un système de commande de barrière d'accès tel que portail ou porte de garage, notamment en fonction de la position et/ou de la direction de mouvement d'un véhicule au voisinage de la barrière d'accès. Il est prévu (figure 9) que des positions particulières d'un transpondeur ou « dispositif de proximité » puissent être apprises à l'aide d'un système de localisation satellite GPS, de manière à ce que le système de commande provoque une action prédéterminée quand le « dispositif de proximité » retrouve une telle position, après apprentissage. Par exemple, si le dispositif de proximité est dans une position dite d'action, alors une action sur un bouton provoque une commande d'ouverture, ce qui n'est pas le cas en dehors de cette position d'action.

Le brevet US 6,563,430 décrit un dispositif de commande à distance dont l'interface utilisateur de commande dépend de la position du dispositif de commande. De nombreuses méthodes de détermination de la position sont décrites. L'information de position n'est pas utilisée pour repérer un équipement particulier.

Le brevet US 7,363,028 décrit également ce type de dispositif de commande et notamment une méthode d'identification radiofréquences de l'équipement le plus proche du dispositif de commande, par décroissance progressive de la puissance d'émission. Il n'y a pas recours à une information de position du dispositif de commande pour repérer un équipement particulier. Au contraire, la position du dispositif de commande peut être déduite de celle d'un équipement particulier, afin de pouvoir se placer dans une configuration fonctionnelle liée à cette position.

Le brevet US 7,110,761 décrit l'usage d'un dispositif de pointage pour établir une connexion sans fil entre le dispositif de pointage et un autre dispositif, ciblé par le dispositif de pointage, afin d'acquérir une information contextuelle sur le dispositif à commander. Le dispositif de pointage utilise la direction d'ondes électriques, magnétiques ou électromagnétiques.

Le brevet US 7,516,039 décrit un dispositif de cartographie d'un local comprenant plusieurs pièces, utilisant un capteur inertiel. Ce dispositif est notamment destiné à des applications militaires en combat urbain.

Le document US2006/0074494 décrit un système et un procédé de localisation d'équipements domotiques dans un bâtiment. L'information de distance entre un émetteur et un récepteur peut être utilisée pour définir une puissance d'émission juste suffisante pour envoyer un message.

Le but de l'invention est de fournir un procédé de fonctionnement d'une installation remédiant aux inconvénients évoqués précédemment et améliorant les procédés connus de l'art antérieur. En particulier, l'invention propose un procédé de fonctionnement sécurisé dans lequel il est possible de repérer de manière simple et conviviale grâce à une unité mobile de commande, tel un téléphone portable, différents équipements de l'installation aussi bien pour les commander que pour les insérer géographiquement dans l'installation.

Le procédé selon l'invention est défini dans la revendication 1 et régit le fonctionnement d'une installation domotique comprenant des éléments incluant des équipements fixés dans un bâtiment et incluant une unité mobile de commande des équipements, les éléments communiquant sur un réseau domotique, chaque élément étant muni d'un identifiant qui lui est propre et d'une clé d'authentification propre au réseau domotique, dite « clé commune », identique pour tous les éléments et authentifiant l'appartenance d'un élément au réseau domotique. Le procédé comprend :
- une étape de localisation de l'unité mobile de commande à l'aide d'un moyen de localisation compris au moins partiellement dans l'unité mobile de commande et délivrant une information de position, puis
- une étape de repérage utilisant au moins l'information de position pour repérer un équipement particulier,
l'étape de repérage permettant l'identification de l'équipement particulier dans un mode d'usage de l'installation domotique et permettant la localisation de l'équipement particulier dans un mode de configuration de l'installation domotique.

L'information de position peut être exprimée dans un maillage spatial apte à différencier les positions respectives de deux équipements de l'installation domotique.

L'équipement particulier peut être l'équipement le plus proche de l'unité mobile de commande lors de l'étape de localisation de l'unité mobile de commande.

Le procédé peut comprendre une étape de visée de l'équipement particulier, utilisant un moyen de visée de l'unité mobile de commande, apte à fournir une information de visée et en ce que l'information de position comprend l'information de visée.

L'information de visée peut comprendre une information d'orientation de l'unité mobile de commande pendant l'étape de visée et/ou une information de distance entre l'unité mobile de commande et l'équipement particulier, notamment une information télémétrique issue du moyen de visée de l'unité mobile de commande.

Le procédé peut comprendre, suite à l'étape de repérage, une étape de transmission à l'unité mobile de commande d'un identifiant de l'équipement particulier et/ou de transmission à l'équipement particulier d'une instruction de sélection.

L'information de position peut être transmise sur le réseau domotique à l'ensemble des équipements ou au moins à un équipement spécifique. L'information de position peut être transmise à un serveur distant en utilisant un moyen de communication de type GSM et/ou un réseau partagé de type internet.

L'étape de repérage peut utiliser des données de localisation des équipements, situées dans une mémoire cartographique.

Le procédé peut comprendre une étape d'affichage, sur un moyen d'affichage de l'unité mobile de commande, d'une interface de commande de l'équipement particulier.

Le procédé peut comprendre une étape de commande dans laquelle l'unité mobile de commande émet un message de commande sur le réseau domotique vers l'équipement particulier, ce message de commande comprenant l'identifiant de l'équipement domotique particulier ou ayant été précédé d'un message de sélection comprenant l'identifiant de l'équipement domotique particulier et le procédé peut comprendre une étape d'exécution de la commande par l'équipement particulier.

Le procédé comprend une étape de configuration dans laquelle la position de l'équipement particulier, déterminée pendant l'étape de repérage à partir de la localisation de l'unité mobile de commande, est enregistrée dans une mémoire cartographique.

Les données de la mémoire cartographique peuvent être reportées dans une modélisation tridimensionnelle du bâtiment.

Selon l'invention, une installation domotique comprenant des équipements et une unité mobile de commande est caractérisée en ce que les équipements et l'unité mobile de commande comprennent des moyens matériels et logiciels de mise en oeuvre du procédé de fonctionnement défini précédemment.

Selon l'invention, l'unité mobile de commande comprend des moyens matériels et logiciels de mise en œuvre du procédé de fonctionnement défini précédemment.

L'invention porte aussi sur un programme informatique comprenant un moyen de code de programme informatique adapté à la réalisation des étapes du procédé défini précédemment, lorsque le programme est exécuté sur un ordinateur.

Le procédé de fonctionnement s'applique aussi bien à un mode d'usage qu'à un mode de configuration. Contrairement aux dispositifs de l'art antérieur, une information de position relative à l'unité mobile de commande est utilisée pour repérer un équipement particulier : soit parce que la position de cet équipement est déjà connue et qu'il s'agit, en repérant l'équipement, de le sélectionner pour qu'il exécute une commande, soit parce qu'il s'agit d'un équipement nouvellement installé et qu'il s'agit, en repérant cet équipement, de déterminer sa position afin de pouvoir enregistrer celle-ci lors d' étape de configuration.

Ainsi, une même unité mobile de commande peut servir à configurer une installation ou peut servir à en commander des équipements, le même apprentissage s'applique à l'installateur et à l'utilisateur, les mêmes réflexes sont acquis. Il en résulte un gain important à la fois en termes économiques qu'en formation ou information.

L'invention sera mieux comprise à la lecture de la description qui va suivre, donnée uniquement à titre d'exemple et faite en se référant aux dessins annexés sur lesquels :
La figure 1 représente sous forme de schéma fonctionnel une installation domotique et une unité mobile de commande selon l'invention.
La figure 2 représente spatialement l'installation domotique et l'unité mobile de commande.
La figure 3 est un ordinogramme d'un mode d'exécution d'un procédé de fonctionnement selon l'invention.
La figure 4 est un ordinogramme d'une première variante du mode d'exécution du procédé de fonctionnement.
La figure 5 est un ordinogramme d'une deuxième variante du mode d'exécution du procédé de fonctionnement.
La figure 6 est un ordinogramme d'une troisième variante du mode d'exécution du procédé de fonctionnement.
La figure 7 est un ordinogramme d'une quatrième variante du mode d'exécution du procédé de fonctionnement.
La figure 8 est un ordinogramme d'une cinquième variante du mode d'exécution du procédé de fonctionnement.
La figure 9 représente partiellement l'unité mobile de commande pour illustrer des détails de réalisation.
La figure 10 représente spatialement l'installation domotique et l'unité mobile de commande lors de mises en oeuvre du procédé selon l'invention.

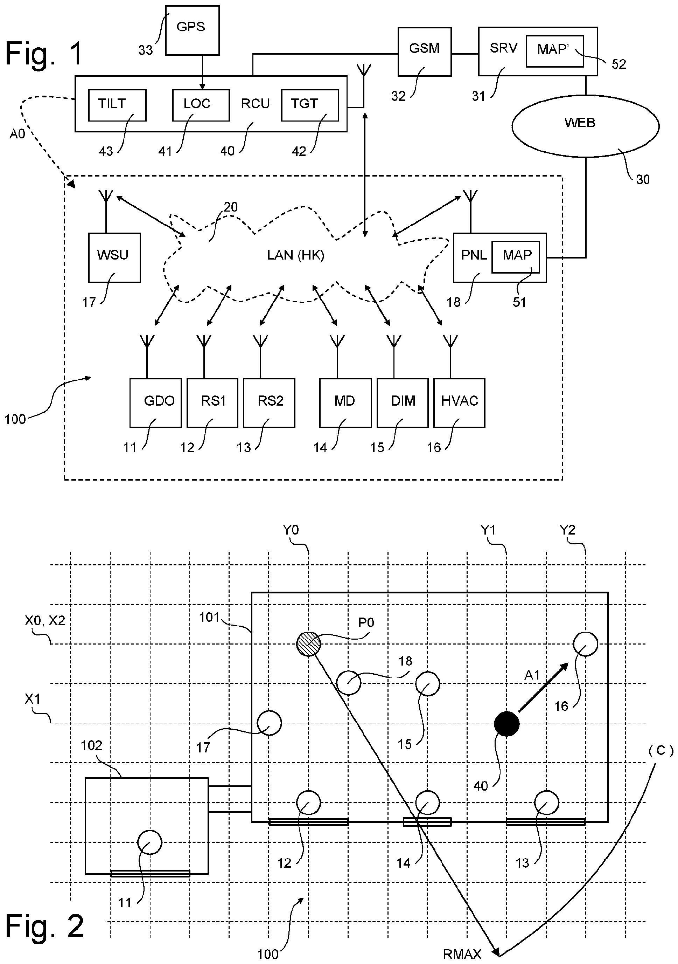

La figure 1 représente sous forme de schéma fonctionnel une installation domotique 100 et une unité mobile de commande 40 selon l'invention. La figure représente également les liaisons de l'installation domotique et de l'unité mobile de commande avec l'environnement.

L'installation domotique comprend des équipements. Certains équipements sont de type actionneur et comprennent en particulier un ou plusieurs actionneurs électriques, notamment des actionneurs de manœuvre d'éléments mobiles comme un élément mobile de fermeture, de protection solaire ou d'occultation. D'autres équipements sont de type capteur ou de type boîtier de commande. Ainsi, dans l'exemple de la figure 1, l'installation comprend :
- un premier équipement 11 de type actionneur pour porte de garage,
- un deuxième équipement 12 de type actionneur pour volet roulant,
- un troisième équipement 13 également de type actionneur pour volet roulant,
- un quatrième équipement 14 de type actionneur pour serrure électrique pour porte principale,
- un cinquième équipement 15 de type actionneur gradateur (« dimmer ») pour dispositif d'éclairage à intensité variable.
- un sixième équipement 16 de type actionneur de chauffage-climatisation,
- un septième équipement 17 de type boîtier de commande et capteur, sous forme d'un interrupteur mural,
- un huitième équipement 18 de type boîtier de commande et capteur incluant un écran d'affichage, une interface de commande tactile et incluant par exemple une sonde de température.

Bien entendu, l'installation peut comprendre un nombre beaucoup plus élevé de boîtiers de commande et/ou de capteurs et peut comprendre d'autres équipements en plus ou remplacement des équipements énumérés précédemment, notamment des équipements de type actionneur de store de terrasse, de traitement de l'eau, de ventilation, etc., y compris de type domestique comme une machine à laver, un téléviseur etc. L'invention s'applique cependant préférentiellement à des équipements occupant une place fixe dans le bâtiment.

Tous les équipements communiquent entre eux sur un même réseau domotique 20, de type local (LAN) et utilisant un protocole commun, par exemple io-homecontrol, EIB, Zigbee etc. (marques déposées). Préférentiellement, le réseau domotique est de type radiofréquences, ce qui est représenté par des flèches bidirectionnelles et un symbole d'antenne sur chaque équipement. Alternativement, plusieurs réseaux locaux de protocole et/ou de média différents sont utilisés pour former le réseau domotique 20. Les équipements comprennent donc chacun un moyen de liaison réseau au réseau domotique 20. Les équipements sont tous de type actif, c'est-à-dire qu'ils sont aptes à émettre ou à recevoir un ordre de commande, ou encore une donnée de mesure issue d'un capteur de l'équipement.

Tous les équipements partagent une clé commune, dite clé maison HK. Cette clé est par exemple un mot de 64 ou 128 bits, logé dans une mémoire de chaque équipement et un algorithme d'authentification utilisant la clé commune est utilisé pour permettre à un équipement de reconnaître qu'un ordre de commande ou un message quelconque est bien issu d'un autre équipement de l'installation.

Par la suite, on dira pour simplifier qu'un message « contient la clé commune » ou « comprend la clé commune » quand son émetteur est authentifié par la clé commune.

En pratique, cette authentification est réalisée par un dialogue entre l'émetteur du message et son destinataire, ou est réalisée par un cryptage du contenu du message à l'aide de la clé commune, ou encore nécessite à la fois un dialogue et un cryptage du contenu du message.

La clé commune n'est donc pas contenue, en tant que telle, dans les messages.

Le huitième équipement 18 peut être connecté à un réseau partagé 30 de type internet par une passerelle, non représentée. Un serveur distant 31 peut aussi être connecté au réseau partagé, rendant ainsi possible une communication entre le huitième équipement et le serveur distant.

Une unité mobile de commande 40 comprend un moyen de liaison réseau au réseau domotique 20, ce moyen de liaison réseau étant également représenté par le symbole d'une antenne et une double flèche. Ce moyen de liaison permet la communication entre l'unité mobile de commande et n'importe lequel des équipements du réseau domotique.

L'unité mobile de commande comprend un moyen de localisation 41 permettant de déterminer la position de l'unité mobile de commande. Elle peut par ailleurs être reliée au serveur 31 par un réseau de communication longue distance 32, par exemple de type réseau de communication pour téléphones portables GSM. Le moyen de localisation 41 utilise préférentiellement une ressource externe 33, par exemple des satellites de géolocalisation de type GPS ou Galiléo fournissant des signaux.

Optionnellement, l'unité mobile de commande peut de plus être munie d'un moyen de visée 42. Avantageusement, le moyen de visée comprend un moyen télémétrique 44 apte à fournir une information de distance entre l'unité mobile de commande et un objet-cible visé par le moyen de visée. Le moyen de visée comprend par exemple un objectif photographique de focale variable avec dispositif autofocus, comme décrit en figure 9.

Le moyen de visée peut comprendre un moyen 43 de mesure de l'orientation de l'unité mobile de commande, notamment un moyen d'inclinaison, comprenant par exemple un accéléromètre, notamment un accéléromètre 3D ou tout dispositif de type boussole ou compas.

Le moyen de localisation peut également comprendre un accéléromètre pour établir une partie d'une information de localisation. Avantageusement, un même accéléromètre 3D est utilisé dans le moyen de localisation, pour des mesures de déplacement par rapport à un point de référence et dans le moyen de mesure d'orientation pour des mesures d'orientation de l'unité mobile de commande.

Un téléphone portable équipé des moyens matériels décrits ci-dessus et de moyens logiciels aptes à exécuter les procédés décrits par la suite peut avantageusement servir d'unité mobile de commande. Le moyen de liaison réseau au réseau domotique est par exemple logé dans la carte SIM du téléphone, ou dans la batterie du téléphone, ou il est lié au téléphone par une connexion amovible, comme une prise jack. Le moyen de liaison réseau est détaillé sous la référence 45 sur la figure 9 : il comprend, en mémoire permanente 46, le protocole PTL du réseau domotique et il comprend, en mémoire effaçable 47, la clé commune HK, si celle-ci a été transmise au moyen de liaison réseau. Pour des raisons de sécurité, le moyen de liaison réseau, fonctionnellement lié à l'unité mobile de commande, est cependant matériellement distinct du téléphone et ne peut être fourni par exemple que par un fabricant d'un des équipements du réseau domotique. Ce caractère distinctif du moyen de liaison réseau apparaît sous la forme d'un trait gras.

L'unité mobile de commande devient un élément de l'installation 100 dès lors qu'elle communique avec un des équipements, appartenance qui est symbolisé par une flèche pointillée A0. Cependant, cette appartenance de l'unité mobile de commande à l'installation peut être seulement provisoire, notamment dans le cas où l'unité mobile de commande est utilisée comme un outil de configuration par un installateur.

La figure 2 représente spatialement un bâtiment comprenant l'installation domotique et l'unité mobile de commande, selon un maillage spatial en plan représenté par deux réseaux perpendiculaires de lignes équidistantes en trait pointillé, dont les intersections sont des nœuds du maillage, repérés par deux coordonnées (X, Y). Alternativement, le maillage spatial comprend avantageusement une troisième dimension (Z), et chaque nœud est repéré par trois coordonnées (X, Y, Z). Le maillage spatial est apte à différencier les positions respectives de deux équipements de l'installation domotique, c'est-à-dire que ces deux équipements présentent des jeux de coordonnées différents. Chaque équipement est représenté centré sur le nœud le plus proche. La distance entre deux lignes consécutives du maillage (le pas du maillage) est donc inférieure ou égale à la distance minimum séparant deux équipements.

Le maillage spatial doit donc être suffisamment précis, non seulement pour être à même de distinguer les équipements actuels de l'installation mais aussi pour permettre l'implantation future de nouveaux équipements. Un maillage spatial beaucoup plus fin que celui représenté peut être utilisé, mais en offrant alors un excès de précision par rapport au besoin. Avantageusement, le maillage spatial peut être par exemple deux fois plus précis, voire 10 fois plus précis, que celui représenté, en vue de l'installation possible d'autres équipements dans des positions intermédiaires. Un pas de maillage de 10 cm correspond à une valeur préférée. La figure 2, pour laquelle le maillage est sensiblement métrique, n'est donc pas représentative d'un maillage réel. Alternativement, le maillage présente un pas auto-adaptatif, le pas du maillage étant par exemple défini en passant progressivement d'un maillage grossier à un maillage plus fin selon l'existence ou non d'une pluralité de réponses à un message d'interrogation, ce message étant émis avec une puissance de plus en plus faible comme décrit dans le brevet US 7,363,028.

Dans le cas très simplifié de la figure 2, l'installation est répartie dans un corps principal de maison 101 et dans un garage 102 attenant au corps principal. Des cloisons internes au bâtiment ne sont pas représentées. Des baies relatives à la porte de garage, à la porte principale et aux fenêtres équipées de volets roulants sont représentées sous forme de triple trait.

L'unité mobile de commande 40 est disposée dans l'installation, sa position étant repérée par des coordonnées X1 et Y1 dans le maillage spatial. Une flèche A1 indique une direction visée par le moyen de visée de l'unité mobile de commande.

Une position particulière P0 est repérée par des coordonnées X0 et Y0. Son rôle sera décrit par la suite.

L'installation comprend des moyens matériels et/ou logiciels permettant de régir son fonctionnement conformément au procédé objet de l'invention. Les moyens logiciels peuvent notamment comprendre un moyen de code de programme informatique adapté à la réalisation des étapes du procédé selon l'invention, lorsque le programme tourne sur un ordinateur. En particulier, l'installation comprend un moyen de localisation de l'unité mobile de commande, le moyen de localisation étant compris au moins partiellement dans l'unité mobile de commande et délivrant une information de position. L'installation comprend aussi un moyen de repérage utilisant au moins l'information de position pour repérer un équipement particulier. L'installation comprend encore un moyen permettant d'identifier l'équipement particulier dans un mode d'usage de l'installation domotique et permettant de localiser l'équipement particulier dans un mode de configuration de l'installation domotique.

L'unité de commande comprend des moyens matériels et/ou logiciels permettant de régir son fonctionnement conformément au procédé objet de l'invention. Les moyens logiciels peuvent notamment comprendre un moyen de code de programme informatique adapté à la réalisation des étapes du procédé selon l'invention, lorsque le programme tourne sur un ordinateur.

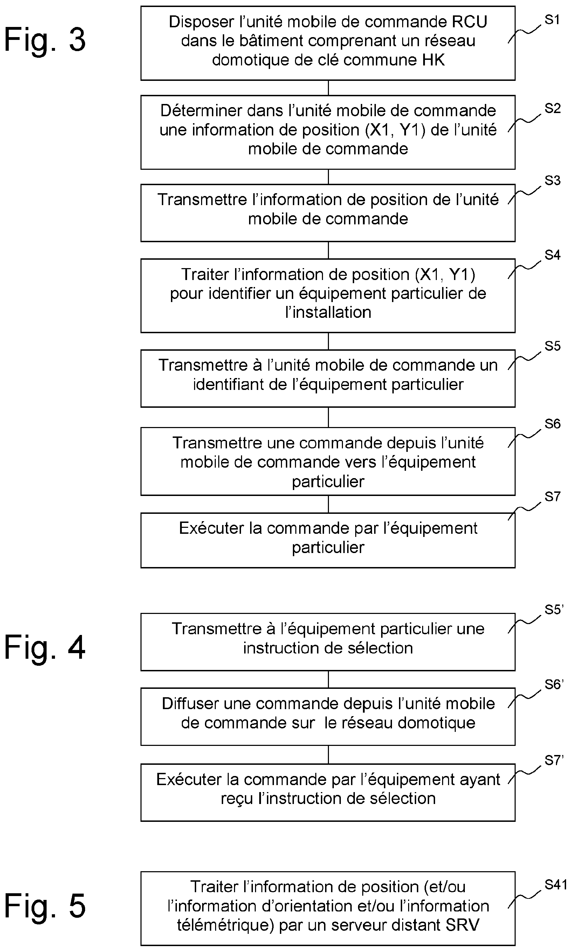

Un mode d'exécution du procédé de fonctionnement selon l'invention est décrit ci-après en référence à la figure 3.

Grâce à un tel mode d'exécution, l'unité mobile de commande peut être utilisée de manière sécurisée pour commander les équipements de l'installation, notamment dans le but de localiser spatialement un équipement par rapport à l'unité mobile de commande ou inversement. En particulier, une information de position de l'unité mobile de commande est utilisée. Cette information de position peut notamment être définie par un maillage spatial apte à différencier les positions respectives de deux équipements de l'installation domotique.

Dans une première étape S1, l'unité mobile de commande est disposée dans le bâtiment équipé avec l'installation domotique des équipements se trouvant dans le bâtiment et/ou aux abords du bâtiment.

Suite à une manœuvre particulière de l'utilisateur, une deuxième étape S2 est activée, dans laquelle une information de position de l'unité mobile de commande est déterminée dans l'unité mobile de commande, à l'aide de son moyen de localisation. Si l'unité mobile de commande est dans la position de la figure 2, l'information de position est par exemple le couple de coordonnées X1, Y1.

L'information de position peut être déduite de données de géolocalisation GPS, corrigées de manière à obtenir un maillage suffisamment précis mais sans précision excessive. Un pas de maillage de 10 cm est par exemple préféré. Si la précision GPS est trop grande, par exemple centimétrique, alors le dernier chiffre de coordonnées n'est pas pris en compte dans l'information de position. Si la précision GPS est trop faible, par exemple métrique, alors les déplacements mesurés par l'accéléromètre de l'unité mobile de commande sont pris en compte afin d'obtenir une localisation plus précise, correspondant au maillage désiré. On peut également améliorer la précision GPS par analyse de la puissance radio reçue depuis les équipements. Comme précisé plus haut, la précision du maillage peut être adaptée dynamiquement, selon l'ajout progressif de nouveaux équipements dans l'installation.

Les déplacements peuvent être mesurés à partir d'une position de référence, par exemple la position particulière P0. En l'absence de réception de signaux satellites GPS, ou pour réduire le coût, toute information de position peut être simplement déduite des déplacements de l'unité mobile de commande à partir de la position de référence.

Dans une troisième étape S3, l'information de position de l'unité mobile de commande est diffusée par celle-ci aux équipements du réseau domotique. Cette étape suppose que la clé maison a déjà été fournie à l'unité mobile de commande, lors d'une étape préalable à la mise en œuvre du procédé de fonctionnement. Par exemple, la clé maison a été transmise sous forme cryptée à l'unité mobile de commande par le serveur distant et le réseau de communication GSM.

Dans une quatrième étape S4, l'information de position, est traitée par au moins un équipement spécifique de l'installation, par exemple le huitième équipement pour repérer un équipement particulier de l'installation. Un critère de repérage utilise l'information de position de l'unité mobile de commande : par exemple, l'équipement particulier est l'équipement le plus proche de l'unité mobile de commande au moment où la deuxième étape a été activée. D'autres critères peuvent être utilisés pour repérer l'équipement particulier.

Afin de procéder à l'identification, l'équipement spécifique comprend une première mémoire cartographique 51 dans laquelle ont été stockées (lors d'une étape de configuration qui sera décrite en relation avec la figure 7) les coordonnées de position de chaque équipement de l'installation.

Une fois l'équipement particulier déterminé, son identifiant est transmis à l'unité mobile de commande par l'équipement spécifique, dans une cinquième étape S5.

Dans une sixième étape S6, l'unité mobile de commande transmet une commande vers l'équipement particulier. La commande comprend l'identifiant de l'équipement particulier et un ordre à exécuter. Ce dernier résulte d'une action de l'utilisateur sur une interface de commande de l'unité mobile de commande. Alternativement, il peut s'agir d'un ordre préenregistré, par exemple un ordre de changement d'état. Alternativement, il peut s'agir d'un ordre résultant d'un mouvement particulier de l'unité de commande, par exemple un pivotement de celle-ci autour d'un axe.

Dans une septième étape S7, l'équipement particulier reçoit et exécute la commande.

Le procédé est susceptible de très nombreuses variantes. Dans tous les cas, l'information de position relative à l'unité mobile de commande est utilisée pour repérer un équipement particulier : soit parce que la position de cet équipement est déjà connue et qu'il s'agit, en repérant l'équipement pendant l'étape de traitement, de le sélectionner pour qu'il exécute une commande, soit parce qu'il s'agit d'un nouvel équipement et qu'il s'agit, en repérant l'équipement pendant l'étape de traitement, de déterminer sa position afin de pouvoir enregistrer celle-ci lors d'une étape de configuration.

Une première variante du mode d'exécution du procédé de fonctionnement selon l'invention est décrite ci-après en référence à la figure 4. Cette première variante diffère du mode d'exécution décrit précédemment en ce que les trois dernières étapes S5-S7 sont respectivement remplacées par trois étapes de substitution S5'-S7'.

Dans une cinquième étape de substitution S5', une instruction de sélection est transmise à l'équipement particulier par l'équipement spécifique. L'instruction de sélection comprend avantageusement l'identifiant de l'unité mobile de commande. Elle signifie que l'équipement particulier devra exécuter toute prochaine commande diffusée par l'unité mobile de commande sur le réseau domotique. Alternativement, l'équipement particulier devra exécuter une commande marquée comme spécifique et diffusée par l'unité mobile de commande sur le réseau domotique.

Dans une sixième étape de substitution S6', l'unité de commande mobile diffuse une commande sur le réseau domotique. Contrairement à une transmission de type point à point, la diffusion ne spécifie pas un destinataire particulier.

Dans une septième étape de substitution S7', la commande est reçue par tous les équipements mais n'est exécutée que par l'équipement particulier (ou l'ensemble des équipements particuliers), ayant préalablement reçu l'instruction de sélection.

Une deuxième variante du mode d'exécution du procédé de fonctionnement selon l'invention est décrite ci-après en référence à la figure 5. Cette deuxième variante diffère du mode d'exécution décrit précédemment quant au lieu de traitement de la quatrième étape. Avantageusement, cette étape de traitement peut être exécutée dans le serveur distant, celui-ci pouvant également contenir une deuxième mémoire cartographique 52 contenant les coordonnées des équipements de l'installation.

Dans ce cas, la troisième étape S3 peut consister à envoyer directement l'information de position au serveur distant, en utilisant le réseau de communication GSM. De même, la cinquième étape peut consister à utiliser également le réseau GSM pour transmettre l'identifiant de l'équipement particulier à l'unité mobile de commande. Alternativement, les informations peuvent toujours être transmises vers ou reçues depuis l'équipement spécifique, celui-ci les communiquant au serveur distant via le réseau internet.

Une troisième variante du mode d'exécution du procédé de fonctionnement selon l'invention est décrite ci-après en référence à la figure 6. Cette troisième variante diffère du mode d'exécution décrit précédemment en ce qu'il comprend des sous-étapes s'ajoutant au procédé de fonctionnement.

Dans une première sous-étape S11, complétant la première étape S1, la manipulation particulière comprend une action de visée de l'équipement particulier avec le moyen de visée de l'unité mobile de commande.

Puis trois sous-étapes complètent la deuxième étape S2. Dans une deuxième sous-étape S21, on détermine dans l'unité mobile de commande RCU une information d'orientation de l'unité mobile de commande RCU à l'aide du moyen de mesure d'orientation. Dans une troisième sous-étape S22, on détermine également une information télémétrique de distance entre l'unité mobile de commande RCU et l'équipement particulier, à l'aide du moyen télémétrique. Dans une quatrième sous-étape S23, on combine l'information d'orientation et l'information télémétrique pour constituer une information de visée. Alternativement, l'information de visée ne comprend que l'information d'orientation si on ne dispose pas de moyen télémétrique.

Dans une cinquième sous-étape S31, complétant la troisième étape, on transmet l'information de visée en sus de l'information de position de l'unité mobile de commande.

Dans une sixième sous-étape S42, complétant la quatrième étape, on utilise simultanément l'information de position et l'information de visée pour identifier l'équipement particulier.

Les différentes étapes du procédé peuvent être itérées pour un même équipement particulier, tant que la précision ne permet pas d'identifier un seul équipement particulier : par exemple parce que deux équipements sont situés actuellement à une même distance de l'unité mobile de commande. Un signal de retour d'information sonore ou visuel, par exemple sous forme d'icône sur l'écran de l'unité mobile de commande, peut indiquer qu'aucun équipement particulier n'est identifiable, ou inversement qu'un équipement particulier est identifié.

Les trois premières variantes du mode d'exécution du procédé ont été décrites dans un mode d'usage de l'installation. Une quatrième variante du mode d'exécution du procédé de fonctionnement selon l'invention est décrite ci-après en référence à la figure 7. Cette quatrième variante est utilisée dans un mode de configuration, quand l'unité mobile de commande est utilisée, par exemple par un installateur, pour configurer l'installation en établissant notamment une cartographie de ses différents équipements. Dans ce cas, les coordonnées des équipements ne sont pas encore enregistrées dans une mémoire cartographique.

Dans cette variante, il suffit de saisir l'identifiant de l'équipement particulier par un moyen connu, par exemple en photographiant un code à barres d'une étiquette de l'équipement, ou encore en lisant une étiquette électronique de l'équipement, comprenant son identifiant, ou encore en envoyant un ordre vers l'équipement au moyen d'une commande locale, cet ordre étant capté par l'unité mobile de commande pour en déduire l'identifiant, et éventuellement d'autres informations relatives à l'équipement.

Puis une septième sous-étape S43, dans laquelle les coordonnées de position de l'équipement, déduites de l'information de position et éventuellement de l'information de visée, permet d'enregistrer dans la mémoire cartographique ces coordonnées, en relation avec l'identifiant de l'équipement particulier.

Concrètement, il suffit donc que l'installateur se déplace dans le bâtiment et pose son unité mobile de commande sur chaque équipement. L'identifiant de l'équipement est transmis à un transpondeur de l'unité mobile de commande par une étiquette électronique de l'équipement et la position de l'unité mobile de commande, donc de l'équipement, est déterminée, les deux étant enregistrés dans une mémoire cartographique.

Alternativement, il suffit que l'installateur vise à distance une étiquette code-barres sur chaque équipement pour produire le même résultat.

Alternativement, une saisie manuelle de l'identifiant de l'équipement à l'aide d'un clavier de l'unité mobile de commande est possible.

Une troisième mémoire cartographique 53 peut être disposée sur l'unité mobile de commande, pour enregistrer ces données et les communiquer en bloc par la suite au serveur distant ou à l'équipement spécifique.

Avantageusement, l'unité mobile de commande communique directement avec chaque nouvel équipement dès qu'il a été identifié, pour lui transmettre la clé maison HK ou simplement s'assurer de son fonctionnement.

Avantageusement, l'unité mobile de commande et/ou le serveur distant et/ou l'équipement spécifique comprend un logiciel de modélisation tridimensionnelle d'un bâtiment, apte à exploiter les données de la mémoire cartographique pour établir et/ou compléter une modélisation tridimensionnelle du bâtiment, en y incluant la position des équipements. La reconstruction virtuelle d'un bâtiment incluant les équipements de l'installation peut ainsi être réalisée, en particulier en combinant l'invention avec les enseignements du brevet US 7,516,039.

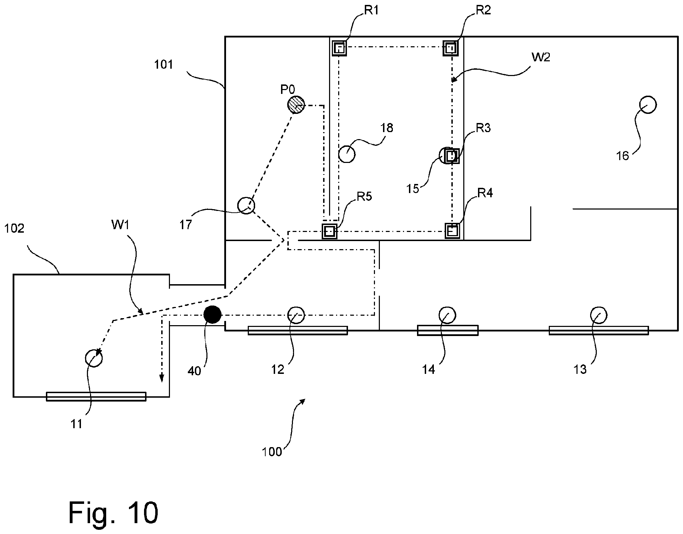

La figure 10 décrit deux cas de mise en œuvre du procédé de commande lorsqu'il est utilisé dans un mode de configuration au sein de l'installation domotique 100 précédente. Les cloisons internes du bâtiment sont cette fois apparentes.

Dans un premier cas de mise en œuvre, partant d'une position initiale P0, l'installateur muni de l'unité mobile de commande se déplace directement d'un équipement à l'autre, comme schématisé par un premier cheminement W1, et il ne procède à une action sur l'unité mobile de commande que lors du repérage de chaque équipement, par exemple les équipements 17 et 11. Seule la position des équipements est enregistrée et ceux-ci sont donc tous repérés : soit relativement, les uns par rapport aux autres et/ou relativement à la position initiale, soit de manière absolue si le moyen de localisation le permet. Le plan de l'installation est alors complété de manière schématique par l'installateur, en utilisant des outils de dessin assisté permettant d'établir un croquis plus ou moins fidèle mais grandement aidé par les repères que sont les équipements.

Dans un deuxième cas de mise en œuvre, l'installateur s'astreint à se déplacer le long des murs et cloisons, et procède à une action sur l'unité mobile de commande non seulement lors du repérage d'un équipement mais aussi lors de chaque changement de parcours et/ou rupture particulière (passage de porte par exemple), comme schématisé par un deuxième cheminement W2. Par exemple, au cours de son trajet l'installateur enregistre schématiquement les changements de parcours R1, R2, R4 et le passage de porte R5, en plus du repérage R3 de l'équipement 15. Et de même pour toutes les pièces, pour tous les niveaux et pour tous les équipements de chaque pièce. Le deuxième cheminement est enregistré par l'unité mobile de commande (ou par le serveur distant), ce qui permet de reconstituer toutes les parois et les passages du bâtiment en plus de la localisation des équipements.

Le choix d'une position initiale P0 relativement centrale dans le bâtiment (contrairement au cas de la figure 10) permet des recalages fréquents sur cette position, ce qui évite le cumul d'erreurs engendré par une méthode purement inertielle. De même, la présence des équipements permet d'augmenter la précision du relevé cartographique en combinant les positionnements établis par coordonnées GPS ou établis par inertie avec des résultats radiogoniométriques liés au repérage des sources d'émission.

Le plan de l'installation tel que généré automatiquement par l'unité mobile de commande (ou par le serveur distant) fait alors apparaître les équipements, les murs, cloisons et ouvertures du bâtiment et peut être affiné par usage d'un logiciel de dessin assisté 2D ou 3D.

Sur le plan sécuritaire, on peut prévoir que la position de référence est une position connue du seul propriétaire ou du seul installateur de l'installation. Cette position sert donc de code d'identification et certaines fonctionnalités, par exemple le transfert de la clé maison, ne peuvent s'effectuer que si l'unité mobile de commande est placée dans la position de référence ou dans une zone réduite incluant la position de référence.

Une autre variante (non représentée) du mode d'exécution du procédé de fonctionnement selon l'invention diffère du mode d'exécution décrit précédemment en ce que les étapes S3 et S5 sont supprimées. L'étape S4 de traitement de l'information de position et de repérage de l'équipement particulier est alors réalisée au niveau de l'unité mobile de commande.

L'invention permet d'utiliser un même procédé de fonctionnement et une même unité mobile de commande pour repérer un équipement particulier afin de le commander dans un mode d'usage et afin de déterminer sa position dans un mode de configuration. Le repérage est donc de type sélectif dans le premier cas, conduisant au repérage d'un identifiant, et de type spatial dans le deuxième cas, conduisant au repérage d'une position. Les repérages de type spatial sont établis en positions relatives, par exemple par rapport à la position de référence, ou en positions absolues, par exemple dans un repère de coordonnées GPS.

Sauf incompatibilité, le mode de réalisation et ses différentes variantes décrites précédemment peuvent être combinés entre eux, de même que les variantes peuvent être combinées entre elles : par exemple, le moyen de visée décrit en mode d'usage peut avantageusement être utilisé dans le mode de configuration.

## Revendications

1. Procédé de fonctionnement d'une installation domotique (100) comprenant des éléments incluant des équipements (11, 12, 13, 14, 15, 16, 17, 18) fixés dans un bâtiment (101, 102) et incluant une unité (40) mobile de commande des équipements, les éléments communiquant sur un réseau domotique (20), chaque élément étant muni d'un identifiant qui lui est propre et d'une clé d'authentification propre au réseau domotique, dite « clé commune », identique pour tous les éléments et authentifiant l'appartenance d'un élément au réseau domotique,
**caractérisé en ce qu'**il comprend :
- une étape de localisation de l'unité mobile de commande à l'aide d'un moyen de localisation (41, 33) compris au moins partiellement dans l'unité mobile de commande et délivrant une information de position, puis
- une étape de repérage utilisant un critère de repérage utilisant au moins l'information de position pour repérer un équipement particulier,
**en ce que** l'étape de repérage permet l'identification de l'équipement particulier dans un mode d'usage de l'installation domotique et permet la localisation de l'équipement particulier dans un mode de configuration de l'installation domotique,
**en ce que** le procédé comprend une étape de configuration dans laquelle la position de l'équipement particulier, déterminée pendant l'étape de repérage à partir de l'information de position de l'unité mobile de commande, est enregistrée dans une mémoire cartographique,
**en ce qu'**une information de position de l'unité mobile de commande est traitée pour identifier l'équipement particulier dans un mode d'usage, et
**en ce que** des coordonnées de position de l'équipement particulier sont enregistrées dans la mémoire cartographique en relation avec l'identifiant de l'équipement particulier.

2. Procédé de fonctionnement selon la revendication 1, **caractérisé en ce que** l'information de position est exprimée dans un maillage spatial apte à différencier les positions respectives de deux équipements de l'installation domotique.

3. Procédé de fonctionnement selon l'une des revendications précédentes, **caractérisé en ce que** l'équipement particulier est l'équipement le plus proche de l'unité mobile de commande lors de l'étape de localisation de l'unité mobile de commande.

4. Procédé de fonctionnement selon l'une des revendications 1 et 2, **caractérisé en ce qu'**il comprend une étape de visée de l'équipement particulier, utilisant un moyen (42) de visée de l'unité mobile de commande, apte à fournir une information de visée et **en ce que** l'information de position comprend l'information de visée .

5. Procédé de fonctionnement selon la revendication 4, **caractérisé en ce que** l'information de visée comprend une information d'orientation de l'unité mobile de commande pendant l'étape de visée et/ou une information de distance entre l'unité mobile de commande et l'équipement particulier, notamment une information télémétrique issue du moyen de visée de l'unité mobile de commande.

6. Procédé de fonctionnement selon l'une des revendications précédentes, **caractérisé en ce qu'**il comprend, suite à l'étape de repérage, une étape de transmission à l'unité mobile de commande d'un identifiant de l'équipement particulier et/ou de transmission à l'équipement particulier d'une instruction de sélection.

7. Procédé de fonctionnement selon la revendication précédente, **caractérisé en ce que** l'information de position est transmise sur le réseau domotique à l'ensemble des équipements ou au moins à un équipement spécifique.

8. Procédé de fonctionnement selon la revendication 6, **caractérisé en ce que** l'information de position est transmise à un serveur distant (31) en utilisant un moyen (32) de communication de type GSM et/ou un réseau partagé (30) de type internet.

9. Procédé de fonctionnement selon l'une des revendications précédentes, **caractérisé en ce que** l'étape de repérage utilise des données de localisation des équipements, situées dans une mémoire cartographique (51 ; 52).

10. Procédé de fonctionnement selon l'une des revendications précédentes, **caractérisé en ce qu'**il comprend une étape d'affichage, sur un moyen d'affichage de l'unité mobile de commande, d'une interface de commande de l'équipement particulier.

11. Procédé de fonctionnement selon l'une des revendications précédentes, **caractérisé en ce qu'**il comprend une étape de commande dans laquelle l'unité mobile de commande émet un message de commande sur le réseau domotique vers l'équipement particulier, ce message de commande comprenant l'identifiant de l'équipement domotique particulier ou ayant été précédé d'un message de sélection comprenant l'identifiant de l'équipement domotique particulier, et **en ce qu'**il comprend une étape d'exécution de la commande par l'équipement particulier.

12. Procédé de fonctionnement d'une installation domotique selon l'une des revendications précédentes, **caractérisé en ce que** les données de la mémoire cartographique sont reportées dans une modélisation tridimensionnelle du bâtiment.

13. Installation domotique (100) comprenant des équipements (11, 12, 13, 14, 15, 16, 17, 18) et une unité mobile de commande (40), **caractérisée en ce que** les équipements et l'unité mobile de commande comprennent des moyens matériels (41, 42, 43, 31, 32, 30, 51, 52) et logiciels de mise en œuvre du procédé de fonctionnement selon l'une des revendications précédentes.

14. Unité mobile de commande (40), **caractérisée en ce qu'**elle comprend des moyens matériels (41, 42, 43) et logiciels de mise en œuvre du procédé de fonctionnement selon l'une des revendications 1 à 12.

## Patentansprüche

1. Betriebsverfahren einer Haustechnikanlage (100), die in einem Gebäude (101, 102) befestigte Ausrüstungen (11, 12, 13, 14, 15, 16, 17, 18) umfassende Elemente enthält und eine bewegliche Steuereinheit (40) der Ausrüstungen umfasst, wobei die Elemente auf einem Haustechniknetz (20) kommunizieren, wobei jedes Element mit einer ihm eigenen Kennung und mit einem dem Haustechniknetz eigenen Authentifizierungsschlüssel, "gemeinsamer Schlüssel" genannt, versehen ist, der für alle Elemente gleich ist und die Zugehörigkeit eines Elements zum Haustechniknetz authentifiziert,
**dadurch gekennzeichnet, dass** es enthält:
- einen Schritt der Lokalisierung der mobilen Steuereinheit mit Hilfe einer Lokalisierungseinrichtung (41, 33), die zumindest teilweise in der mobilen Steuereinheit enthalten ist und eine Positionsinformation liefert, dann
- einen Schritt der Markierung, der ein Markierungskriterium verwendet, das mindestens die Positionsinformation verwendet, um eine bestimmte Ausrüstung zu markieren,
dass der Markierungsschritt die Identifizierung der bestimmten Ausrüstung in einem Nutzungsmodus der Haustechnikanlage erlaubt und die Lokalisierung der bestimmten Ausrüstung in einem Konfigurationsmodus der Haustechnikanlage erlaubt,
dass das Verfahren einen Konfigurationsschritt enthält, in dem die Position der bestimmten Ausrüstung, die während des Markierungsschritts ausgehend von der Positionsinformation der mobilen Steuereinheit bestimmt wird, in einem kartografischen Speicher gespeichert wird,
dass eine Positionsinformation der mobilen Steuereinheit verarbeitet wird, um die bestimmte Ausrüstung in einem Nutzungsmodus zu identifizieren, und
dass Positionskoordinaten der bestimmten Ausrüstung im kartografischen Speicher in Verbindung mit der Kennung der bestimmten Ausrüstung gespeichert werden.

2. Betriebsverfahren nach Anspruch 1, **dadurch gekennzeichnet, dass** die Positionsinformation in einem Raumgitter ausgedrückt wird, das die jeweiligen Positionen von zwei Ausrüstungen der Haustechnikanlage unterscheiden kann.

3. Betriebsverfahren nach einem der vorhergehenden Ansprüche, **dadurch gekennzeichnet, dass** die bestimmte Ausrüstung die der mobilen Steuereinheit im Lokalisierungsschritt der mobilen Steuereinheit am nächsten liegende Ausrüstung ist.

4. Betriebsverfahren nach einem der Ansprüche 1 und 2, **dadurch gekennzeichnet, dass** es einen Schritt des Anvisierens der bestimmten Ausrüstung enthält, der eine Visiereinrichtung (42) der mobilen Steuereinheit verwendet, die eine Visierinformation liefern kann, und dass die Positionsinformation die Visierinformation enthält.

5. Betriebsverfahren nach Anspruch 4, **dadurch gekennzeichnet, dass** die Visierinformation eine Ausrichtungsinformation der mobilen Steuereinheit während des Visierschritts und/oder eine Abstandsinformation zwischen der mobilen Steuereinheit und der bestimmten Ausrüstung, insbesondere eine telemetrische Information enthält, die von der Visiereinrichtung der mobilen Steuereinheit stammt.

6. Betriebsverfahren nach einem der vorhergehenden Ansprüche, **dadurch gekennzeichnet, dass** es nach dem Markierungsschritt einen Schritt der Übertragung einer Kennung der bestimmten Ausrüstung an die mobile Steuereinheit und/oder der Übertragung einer Auswahlanweisung an die bestimmte Ausrüstung enthält.

7. Betriebsverfahren nach dem vorhergehenden Anspruch, **dadurch gekennzeichnet, dass** die Positionsinformation auf dem Haustechniknetz an die Gesamtheit der Ausrüstungen oder zumindest an eine spezielle Ausrüstung übertragen wird.

8. Betriebsverfahren nach Anspruch 6, **dadurch gekennzeichnet, dass** die Positionsinformation an einen fernen Server (31) unter Verwendung einer Kommunikationseinrichtung (32) des Typs GSM und/oder eines gemeinsam genutzten Netzes (30) des Typs Internet übertragen wird.

9. Betriebsverfahren nach einem der vorhergehenden Ansprüche, **dadurch gekennzeichnet, dass** der Markierungsschritt Lokalisierungsdaten der Ausrüstungen verwendet, die sich in einem kartografischen Speicher (51; 52) befinden.

10. Betriebsverfahren nach einem der vorhergehenden Ansprüche, **dadurch gekennzeichnet, dass** es einen Schritt der Anzeige, auf einer Anzeigeeinrichtung der mobilen Steuereinheit, einer Steuerschnittstelle der bestimmten Ausrüstung enthält.

11. Betriebsverfahren nach einem der vorhergehenden Ansprüche, **dadurch gekennzeichnet, dass** es einen Steuerschritt enthält, in dem die mobile Steuereinheit eine Steuernachricht auf dem Haustechniknetz an die bestimmte Ausrüstung sendet, wobei diese Nachricht die Kennung der bestimmten Haustechnikausrüstung enthält, oder eine Auswahlnachricht ihr vorausgeht, die die Kennung der bestimmten Haustechnikausrüstung enthält, und dass es einen Schritt der Ausführung der Steuerung durch die bestimmte Ausrüstung enthält.

12. Betriebsverfahren einer Haustechnikanlage nach einem der vorhergehenden Ansprüche, **dadurch gekennzeichnet, dass** die Daten des kartografischen Speichers in eine dreidimensionale Modellierung des Gebäudes übertragen werden.

13. Haustechnikanlage (100), die Ausrüstungen (11, 12, 13, 14, 15, 16, 17, 18) und eine mobile Steuereinheit (40) enthält, **dadurch gekennzeichnet, dass** die Ausrüstungen und die mobile Steuereinheit Hardware- (41, 42, 43, 31, 32, 30, 51, 52) und Software-Einrichtungen zur Durchführung des Betriebsverfahrens nach einem der vorhergehenden Ansprüche enthalten.

14. Mobile Steuereinheit (40), **dadurch gekennzeichnet, dass** sie Hardware- (41, 42, 43) und Software-Einrichtungen zur Durchführung des Betriebsverfahrens nach einem der Ansprüche 1 bis 12 enthält.

## Claims

1. A method of operating a home-automation installation (100) comprising elements including appliances (11, 12, 13, 14, 15, 16, 17, 18) fixed in a building (101, 102) and including a mobile unit (40) for control of the appliances, the elements communicating on a home-automation network (20), each element being furnished with its own specific identifier and with an authentication key specific to the home-automation network, termed "common key", identical for all the elements and authenticating an element's membership of the home-automation network,
**characterized in that** it comprises:
- a step of locating the mobile control unit with the aid of a localization means (41, 33) included at least partially in the mobile control unit and delivering a position information, and then
- a step of spotting using a spotting criterion using at least the position information to spot a particular appliance,
**in that** the spotting step allows the identification of the particular appliance in a usage mode of the home-automation installation and allows the localization of the particular appliance in a configuration mode of the home-automation installation,
**in that** the method comprises a configuration step in which the position of the particular appliance, determined during the spotting step on the basis of the localization of the mobile control unit, is recorded in a cartographic memory,
**in that** an information of position of the mobile control unit is processed for identifying the particular appliance in a use mode, and
**in that** position coordinates of the particular appliance are recorded in the cartographic memory in conjunction with the identifier of the particular appliance.

2. The operating method as claimed in claim 1, **characterized in that** the position information is expressed in a spatial mesh able to differentiate the respective positions of two appliances of the home-automation installation.

3. The operating method as claimed in one of the preceding claims, **characterized in that** the particular appliance is the appliance nearest to the mobile control unit during the step of locating the mobile control unit.

4. The operating method as claimed in one of claims 1 and 2, **characterized in that** it comprises a step of aiming the particular appliance, using a means (42) of aiming of the mobile control unit, able to provide an aiming information and **in that** the position information comprises the aiming information.

5. The operating method as claimed in claim 4, **characterized in that** the aiming information comprises an information of orientation of the mobile control unit during the aiming step and/or an information regarding the distance between the mobile control unit and the particular appliance, especially a telemetric information coming from the mobile control unit aiming means.

6. The operating method as claimed in one of the preceding claims, **characterized in that** it comprises, subsequent to the spotting step, a step of transmitting to the mobile control unit an identifier of the particular appliance and/or of transmitting to the particular appliance a selection instruction.

7. The operating method as claimed in the preceding claim, **characterized in that** the position information is transmitted on the home-automation network to all of the appliances or at least to a specific appliance.

8. The operating method as claimed in claim 6, **characterized in that** the position information is transmitted to a remote server (31) by using a communication means (32) of GSM type and/or a shared network (30) of Internet type.

9. The operating method as claimed in one of the preceding claims, **characterized in that** the spotting step uses appliances localization data, situated in a cartographic memory (51; 52).

10. The operating method as claimed in one of the preceding claims, **characterized in that** it comprises a step of displaying, on a display means of the mobile control unit, a control interface of the particular appliance.

11. The operating method as claimed in one of the preceding claims, **characterized in that** it comprises a control step in which the mobile control unit transmits a command message on the home-automation network to the particular appliance, this command message comprising the identifier of the particular home-automation appliance or having been preceded by a selection message comprising the identifier of the particular home-automation appliance, and **in that** it comprises a step of execution of the command by the particular appliance.

12. The method of operating a home-automation installation as claimed in one of the preceding claims, **characterized in that** the data of the cartographic memory are incorporated in a three-dimensional modeling of the building.

13. A home-automation installation (100) comprising appliances (11, 12, 13, 14, 15, 16, 17, 18) and a mobile control unit (40), **characterized in that** the appliances and the mobile control unit comprise hardware (41, 42, 43, 31, 32, 30, 51, 52) and software means for implementing the operating method as claimed in one of the preceding claims.

14. A mobile control unit (40), **characterized in that** it comprises hardware (41, 42, 43) and software means for implementing the operating method as claimed in one of claims 1 to 12.
